# EUROPEAN PATENT APPLICATION

(11) **EP 2 317 170 A2**
(43) Date of publication of application: **04.05.2011**
(21) Application number: 10181587.6
(22) Date of filing: 29.09.2010
(51) Int. Cl.: F16D 23/12, F16D 25/08, F16D 13/38

(54) **Clutch apparatus**

(30) Priority: 02.11.2009 JP 2009252224
(71) Applicant: AISIN SEIKI KABUSHIKI KAISHA, Kariya-shi, Aichi 448-8650 (JP)
(72) Inventor: Hattori, Yasuaki, Kariya-shi Aichi 448-8650 (JP); Kida, Tokiyoshi, Kariya-shi Aichi 448-8650 (JP); Hisaeda, Yusuke, Kariya-shi Aichi 448-8650 (JP)
(74) Representative: Kramer - Barske - Schmidtchen

(57) **Abstract**

A clutch apparatus includes: a flywheel (4); a pressure plate (24) opposed to the flywheel; a clutch disk (10) disposed between the flywheel and the pressure plate; a clutch cover (21) that rotates together with the flywheel; a release bearing (25) disposed so as to be movable in an axial direction of the clutch cover; a release lever (22) having a pressured point (22a) for receiving pressure load from the release bearing, a pivot point (22b) at which the lever is pivotally supported by the clutch cover, and an action point (22c) which presses the pressure plate toward the flywheel; and a release mechanism (30;50) configured to move the release bearing based on an operation of a clutch pedal. The release mechanism includes a spring (40;54) having a spring load so as to be balanced with pressure load generated from friction surfaces of the clutch disk when the clutch is pressed by the flywheel and the pressure plate. The release mechanism includes a mechanism which uses working amount of the clutch pedal to have the load from the spring unbalance with the pressure load generated from the friction surfaces of the clutch disk.

## Description

### BACKGROUND

The invention relates to a clutch apparatus for coupling, in an interruptive way, between input and output axes, and, in particular, to a clutch apparatus which disables the coupling between the input and output axes with small working amount of a clutch pedal.

The vehicle is provided with a clutch apparatus installed at a power transfer path between an engine and a transmission to disable the transfer of the rotational power of the engine to the transmission in starting the engine or shifting a transmission gear. The clutch apparatus is configured so that working force resulting from footing a clutch pedal transfers through mechanisms such as a hydraulic mechanism and a linking mechanism to the clutch apparatus which, in turn, disables the coupling between the engine and the transmission. In a conventional clutch apparatus, a clutch disk is inserted and disposed between a flywheel and a pressure plate, and the clutch apparatus comes into an engaged mode by pressing the pressure plate due to elastic force of a diaphragm spring rotatably supported with a clutch cover integrated to the flywheel so as to rotate together with the wheel, while the clutch apparatus comes into a released mode by pushing, with a piston rod mounted into a clutch operating cylinder attached to the clutch housing, against one end of a clutch release fork supported in an oscillating way with a clutch housing, and, thus, pushing against the diaphragm spring (for example, refer to JP-A 1996-105457). The operation of pushing with the piston rod in order to bring the clutch apparatus to the released mode is primary carried out by imposing load onto the piston rod from the clutch pedal installed near a driver's seat.

In operation of the conventional clutch apparatus, pedaling or operational load to the clutch pedal may reduce by employing leverage effect on the clutch pedal so that lever ratio may increase. Moreover, in order to further reduce the pedaling load to the clutch pedal, the clutch pedal is provided with an assistance mechanism to assist in the pedaling force for the clutch pedal.

For example, JP-A 1997-315174 discloses an apparatus for reducing a pedaling or treading force to an operating pedal of a clutch. The pedal is rotatably attached to the vehicular body side member by a pivot. An assisting spring made of a pression coil spring giving assistance force in a pedaling direction to the operating pedal after the operating pedal has been trodden by a given stroke is provided between the operating pedal and a vehicular body side member in front of the pedal. Pedal side and vehicular body side supporting parts having respective ball parts on the tips of their shaft parts are attached to the operating pedal and the vehicular side member respectively so that the ball parts are opposed to each other. Pedal side and vehicular body side spring bearing receivers having respective concave parts at their centers and spring bearing surfaces at the outer peripheries thereof are mounted on the pedal side and vehicular body side supporting parts respectively with their concave parts being fitted onto the associated ball parts respectively. The assisting spring is interposed between the spring bearing surfaces so as to urge the spring bearing surface of the pedal side spring bearing receiver to be shifted behind the center of the ball part of the pedal side supporting part and the spring bearing surface of the vehicular body side spring bearing receiver to be shifted ahead of the center of the ball part of the vehicular body side supporting part. In this way, it is possible with an extremely simple configuration not only to use the assisting spring having high output and, hence, considerably reduce the pedaling force to the operating pedal, but also to eliminate, though the assisting spring having the high output is employed, the rapid rise of the pedaling force at the ending time of the time interval during which the operating pedal returns to its original position and, thus, improve pedal operation feeling together with the reduction of the pedaling force at the initial time in footing the pedal.

JP-A 2002-181075 discloses a clutch operation mechanism for operating a clutch pedal provided in the vehicle. A stepping force auxiliary member for the clutch pedal is mounted between the clutch pedal and a vehicular side frame, and the stepping force auxiliary member is a gas spring. In this way, the driver can operate or pedal the clutch pedal with lower stepping force, thereby improving driving operation feeling and, further, it is not necessary to increase a pedal stroke in order to reduce stepping operation load, so that operation ability becomes better and it is possible to alleviate the driver's fatigue for operating the clutch pedal.

### SUMMARY OF THE INVENTION

However, in those conventional clutch apparatuses, since the assisting mechanisms for assisting in the pedaling force are installed at the clutch pedal which becomes most downstream region of a clutch operation path, load at a more upstream region of the clutch operation path than the clutch pedal or load at an axial portion of the clutch pedal (load due to resistance against mechanical sliding) may increase, and, hence, load efficiency deteriorates, thereby excessive force occurs against the pedaling force. For this reason, the more upstream region of the clutch operation path than the clutch pedal or the axial portion of the clutch pedal should be configured so as to endure the increased load, and, thus, there is a problem that cost of components thereof may increase.

Furthermore, in the vehicle with large engine torque, torque capacity necessary to transfer the large torque may increase. Thus, it is necessary to enlarge size of the clutch apparatus. In case that it is impossible to enlarge the size of the clutch in view of spatial limitations, pressure load of a diaphragm spring pushing against a pressure plate is increased. As a result, although, as in the conventional techniques, the assisting mechanisms for assisting in the pedaling force are installed at the clutch pedal, the working amount relative to the clutch pedal may increase when bringing the clutch apparatus to the released mode, and, further, the pedaling force and stroke to the clutch pedal may increase, thereby limiting the improvement of the clutch operation feeling.

Accordingly, a primary object of the invention is to provide a clutch apparatus which, even in the vehicle with the large engine torque, can improve the clutch operation feeling by improving the load efficiency in the clutch operation path.

According to a first aspect of the disclosure, a clutch apparatus comprising:
a flywheel;
a pressure plate opposed to the flywheel;
a clutch disk disposed between the flywheel and the pressure plate;
a clutch cover that rotate together the flywheel;
a release bearing disposed so as to be movable in an axial direction of the clutch cover;
a release lever having a pressured point for receiving pressure load from the release bearing, a pivot point at which the lever is pivotally supported by the clutch cover, and an action point which presses the pressure plate toward the flywheel; and
a release mechanism configured to move the release bearing based on an operation of a clutch pedal,
wherein the release mechanism includes a spring having a spring load so as to be balanced with pressure load generated from friction surfaces of the clutch disk when the clutch is pressed by the flywheel and the pressure plate, and
wherein the release mechanism includes a mechanism which uses working amount of the clutch pedal to have the load from the spring unbalance with the pressure load generated from the friction surfaces of the clutch disk.

According to a second aspect of the disclosure, a biasing direction of the spring is set to 90° with respect to a direction of load resulting from the operation of the clutch pedal.

According to a third aspect o the disclosure, the clutch disk includes a disk spring, friction materials are attached to opposite sides of the disk spring at a portion where the disk spring is disposed between the flywheel and the pressure plate, and the pressure load generated from the friction surfaces of the clutch disk is load generated from the disk spring when the clutch disk is pressed between the flywheel and the pressure plate.

According to a fourth aspect of the disclosure, the release mechanism includes: a straight rack bar which includes teeth and is movable in an extending direction of the rack bar according to the operation of the clutch pedal; a gear plate which has a circular plate whose outer surface has teeth engaged with the teeth of the rack bar and is rotatably supported with a clutch housing; a first seat attached to one end of the spring of the release mechanism and pivotally supported with respect to a rotation axis of the gear plate; a second seat attached to the other end of the spring of the release mechanism so as to slide in a radius direction of the gear plate from a predetermined portion of the gear plate and moving together with the rotation of the gear plate in the same direction as the rotation direction of the gear plate; a ball rollably supported with a surface of the second seat opposite to the spring; and a pressure transfer mechanism oscillates the release bearing through the ball according to a pressuring direction of the spring and having a cam surface on and along which the ball rolls.

According to a fifth aspect of the disclosure, the pressure transfer mechanism includes a hydraulic mechanism which includes:
a first piston for pressing against the release bearing;
a second piston at which the cam surface is formed; and
a housing including:
   a first cylinder attached to the clutch for receiving the first piston so that the first piston slides in the axial direction therein;
   a first oil chamber defined by the first cylinder and the first piston;
   a second cylinder for receiving the second piston so that the second piston slides therein;
   a second oil chamber defined by the second cylinder and the second piston; and
   an oil channel communicating the first and second oil chambers with each other, wherein the first and second chambers and the oil channel are filled with working oil.

According to a sixth aspect of the disclosure, the second cylinder receives the second piston so that the second piston slides in the radius direction therein.

According to a seventh aspect of the disclosure, the pressure transfer mechanism includes a lever mechanism including a lever member having the cam surface as a pressed point portion;
a pivot point pivotally supported by the clutch housing; and
an action point pressing against the release bearing.

### EFFECTS OF THE INVENTION

According to the aspects of the invention, even when with the large engine torque, the pressure load (load from the disk spring) generated from the friction surfaces of the clutch disk disposed between the flywheel and the pressure plate becomes large, the pedaling force to the clutch pedal is used only to have the load from the spring of the release mechanism unbalance with the pressure load generated from the friction surfaces of the clutch disk, and the pedaling force used to bring about the unbalance corresponds to the friction force resulting from the load from the spring of the release mechanism (or corresponds to frictional resistance generated when the ball rolls), so that the clutch apparatus comes into the released mode with very small working amount of the clutch pedal. For this reason, the load efficiency in the more downstream region (clutch pedal region) of the clutch operation path than the release mechanism may improve, and, hence, it is possible to improve the clutch operation feeling even in the vehicle with the large engine torque.

### BRIEF DESCRIPTION OF THE DRAWINGS

Fig.1 is a schematic cross-sectional view of a clutch apparatus according to a first embodiment of the invention in which the clutch apparatus comes into the engagement mode;
Fig.2 is a schematic cross-sectional view of the clutch apparatus according to the first embodiment of the invention in which the clutch apparatus comes into the disengagement mode;
Fig.3 is a schematic cross-sectional view of a clutch apparatus according to a second embodiment of the invention in which the clutch apparatus comes into the engagement mode; and
Fig.4 is a schematic cross-sectional view of the clutch apparatus according to the second embodiment of the invention in which the clutch apparatus comes into the disengagement mode.

### DETAILED DESCRIPTIONS OF EXEMPLARY EMBODIMENTS

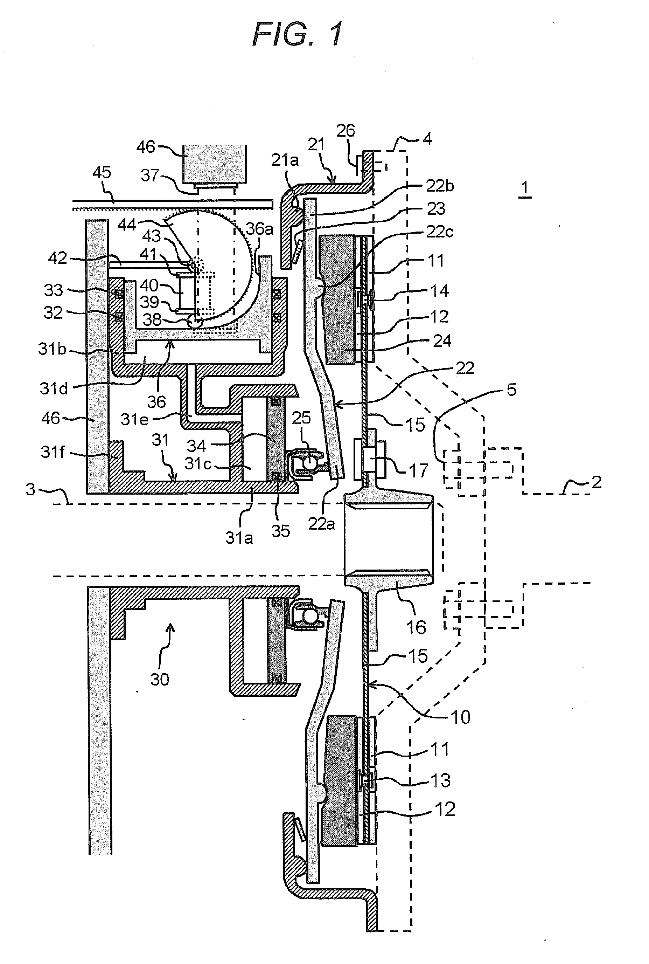

The clutch apparatus according to one embodiment of the invention includes a flywheel (4 in Fig.1); a pressure plate (24 in Fig.1) opposed to the flywheel; a clutch disk (10 in Fig.1) disposed between the flywheel and the pressure plate; a clutch cover (21 in Fig.1) rotating together with the flywheel; a release bearing (25 in Fig.1) disposed so as to be movable in an axial direction; a release lever (22 in Fig.1) having a pressured point (22a in Fig.1) at which pressure load from the release bearing is applied to the lever, a pivot point (22b in Fig.1) at which the lever is pivotally supported by the clutch cover, and an action point (22c in Fig.1) at which the lever presses against the pressure plate toward the flywheel; and a release mechanism (30 in Fig.1) for oscillating the release bearing based on operation of a clutch pedal, wherein the release mechanism has a mechanism (for example, a gear plate (44 in Fig.1) and a rack bar (45 in Fig.1) which sets, when the clutch disk is pressed between the flywheel and the pressure plate, load from a spring (40 in Fig.1) thereof so as to balance with pressure load generated from friction surfaces of the clutch disk, and uses working amount of the clutch pedal to have the load from the spring unbalance with the pressure load generated from the friction surfaces of the clutch disk.

### First embodiment

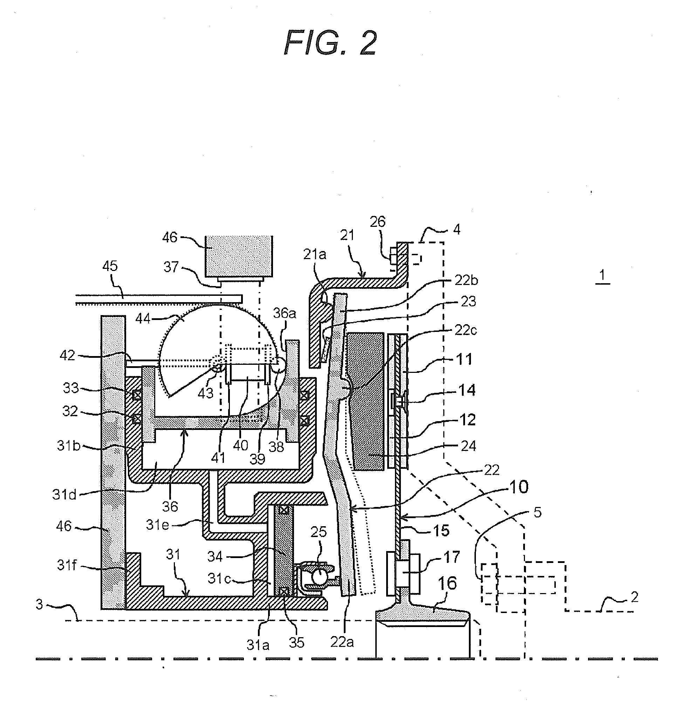

Herein, the clutch apparatus according to a first embodiment of the invention will be described with reference to the drawings. Fig.1 is a schematic cross-sectional view of the clutch apparatus according to the first embodiment of the invention in which the clutch apparatus comes into the engagement mode. Fig.2 is a schematic cross-sectional view of the clutch apparatus according to the first embodiment of the invention in which the clutch apparatus comes into the disengagement mode.

The clutch apparatus 1 couples in an interruptive way, between an input axis (e.g., a crank shaft of an engine) and an output axis (e.g., an input axis of a transmission) and includes the release mechanism 30 having the mechanism which sets, when the clutch disk 10 is pressed between the flywheel 4 and the pressure plate 24, the load from the spring 40 thereof so as to balance with the pressure load (load from a disk spring 15 (clutch spring)) generated from friction surfaces of the clutch disk 10, and uses working amount (corresponding to stroke of the gear plate 44) of a clutch pedal (not shown) to have the load from the spring unbalance with the pressure load generated from the friction surfaces of the clutch disk. The clutch apparatus 1 is installed at a power transfer path between input and output axes 2, 3 which are coaxial with each other, and includes, as primary components thereof, the flywheel 4, the clutch disk 10, the clutch cover 21, the release lever 22, a disk spring 23, the pressure plate 24, the release bearing 25, and the release mechanism 30.

The flywheel 4 is a circular plate made of cast iron, and is fixed to the input axis 2 using bolts 5 so as to rotate together with the input axis 2. The clutch cover 21 is fixed by bolts 26 to an outer circumference of an output axis 3 side (left side of Fig.1) surface of the flywheel 4 so that the flywheel 4 rotates together with the clutch cover 21. When the clutch disk 10 is pressed toward the flywheel 4 by the pressure plate 24, a center region of the output axis 3 side (left side of Fig.1) surface of the flywheel 4 contacts and fixed to a friction material 11 of the clutch disk 10 (when the pressure is small, the central region of the output axis 3 side surface of the flywheel 4 slidably contacts the friction material 11 of the clutch disk 10 so as to slide on the material 11).

The clutch disk 10 is a disk type member transferring the rotational power from the output axis 3 to the input axis. In this clutch disk 10, friction materials 11, 12 are fixed respectively by rivets 13, 14 to both surfaces of an outer circumference of a circular plate type disk spring 15. An inner circumference of the disk spring 15 is fixed by a rivet 17 to an outer circumference of a hub member 16. An inner circumference of the hub member 16 is engaged, in a spline way, with the output axis 3 so that the hub member 16 is not able to rotate in a relative way to the output axis 3 and is able to move in the axial direction. The clutch disk 10 is arranged between the flywheel 4 and the pressure plate 24, and, thus, when the disk 10 is pressed toward the flywheel 4 by the pressure plate 24, the friction material 12 thereof is attached in a pressed way to the pressure plate 24 (when the pressure is small, the material 12 slidably contacts the plate 24 so as to slide on the plate 24), and, at the same time, the friction material 11 thereof is attached in a pressed way to the flywheel 4 (when the pressure is small, the material 11 slidably contacts the wheel 4 so as to slide on the wheel 4). When the disk spring 15 is pressed between the flywheel 4 and the pressure plate 24, the disk spring 15 generates the spring load so as to bias the material 11 toward the flywheel 4, and, at the same time, bias the material 12 toward the pressure plate 24. That is, when the clutch disk 10 is pressed between the flywheel 4 and the pressure plate 24, the pressure load generated from friction surfaces of the clutch disk 10 corresponds to the load from the disk spring 15, and balances with the load from the spring 40 of the release mechanism 30. Meanwhile, regarding the spring load pressure, loads from the disk spring 23 and return spring 37 are as small as are negligible relative to the load from the spring 40. The clutch disk may have a mechanism (not shown) for absorbing torque variation between the input and output axes 2, 3.

The clutch cover 21 is a ring shape member for pivotally supporting the release lever 22. An outer circumference of the clutch cover 21 is fixed to the flywheel 4 using a bolt 26, and thus rotates together with the flywheel 4. An inner circumference of the clutch cover 21 is spaced with the flywheel 4. The clutch cover 21 has a protrusion 21a pivotally supporting the pivot point 22b of the release lever 22 at a release lever side surface of the inner circumference thereof. The clutch cover 21 supports one end of the disk spring 23 with an inner circumference side of the protrusion 21a thereof.

The release lever 22 includes a lever pivotally supported by the clutch cover 21. The release lever 22 is disposed between the pressure plate 24 and the disk spring 23. The release lever 22 includes, at an inner circumference thereof, the pressured point 22a at which the pressure from the release bearing 25 is applied to the lever 22. The release lever 22 includes, at an outer circumference thereof, the pivot point 22b at which the lever 22 is pivotally supported by the protrusion 21a of the clutch cover 21. The release lever 22 includes, at a pressure plate 24 side surface of a middle portion thereof, the action point 22c at which the lever 22 is in contact with the pressure plate 24. The release lever 22 is biased toward the pressure plate 24 by the disk spring 23 between the pivot point 22b and the pressuring point potion 22c to the extent that the pressure plate 24 and the action point 22c are not spaced with each other. When the pressure from the release bearing 25 is applied to the pressured point 22a of the release lever 22, the inner circumference thereof moves, while the pressured point 22b thereof is supported with the cover 21, toward the pressure plate 24, and, in turn, the action point 22c thereof presses the pressure plate 24 against the flywheel 4.

The disk spring 23 is a spring biasing the release lever 22 toward the pressure plate 24 to the extent that the pressure plate 24 and the action point 22c are not spaced with each other. The disk spring 23 is disposed between the clutch cover 21 and the release lever 22, and one end thereof is supported with the clutch cover 21 while the other end thereof biases toward the plate 24 the portion of the release lever 22 between the pivot point 22b and the action point 22c.

The pressure plate 24 is a plate pressing the clutch disk 10 against the flywheel 4 so that the clutch disk 10 is disposed between the pressure plate and the flywheel, and having the clutch disk 10 frictionally engaged with the flywheel 4 so that the clutch disk 10 rotates together with the flywheel 4. The pressure plate 24 is disposed so as to be opposed to the flywheel 4 through the clutch disk 10. The pressure plate 24 is coupled to the clutch cover using a strap (not shown) in such a way as to rotate together with the rotation of the clutch cover 21. The pressure plate 24 is in contact with the action point 22c of the release lever 22. The pressure plate 24, when being pressed toward the flywheel 4 by the release lever 22, comes into being attached in the pressed way to the friction material 12 of the clutch disk 10 (when the pressure is small, the plate 24 slidably contacts the material 12).

The release bearing 25 is a ring shape ball bearing, and is disposed at an outer periphery of the output axis 3. The release bearing 25 is configured so as to be able to be movable (oscillate) in the axial direction according to the axial directional movement of the first piston 34 of the release mechanism 30. The release bearing 25, as shown in Fig.1, has a ball interposed between inner and outer wheels thereof, and the outer wheels is a non-rotational wheel operated by the release mechanism 30 in the axial direction, and the inner wheel is a rotational wheel rotating together with the rotation of the release lever 22.

The release mechanism is a mechanism engaging/releasing the clutch apparatus 1. The release mechanism 30 moves the release bearing based on the operation of the clutch pedal (not shown). The release mechanism 30 has the mechanism which sets, when the clutch disk 10 is pressed between the flywheel 4 and the pressure plate 24, the load from the spring 40 thereof so as to balance with the pressure load (corresponding to the load from the disk spring 15) generated from friction surfaces of the clutch disk 10, and uses working amount (corresponding to the stroke of the rack bar 45 or rotation amount of the gear plate 44) of the clutch pedal (not shown) to have the load from the spring 40 unbalance with the pressure load generated from the friction surfaces of the clutch disk 10. The release mechanism 30 includes as the primary components a housing 31, seals 32, 33, a first piston 34, a seal 35, a second piston 36, a return spring 37, a ball 38, a seat 39, a spring 40, a seat 41, a supporting member 42, an axial member 43, a gear plate 44 and a rack bar 45.

The housing 31 is a member becoming the cylinders receiving the first and second pistons 34, 36. The housing 31 is installed at the outer periphery of the output axis 3. The housing 31 includes a first ring-shape cylinder 31a receiving the first piston 34 pressing the release bearing 25 so that the first piston 34 may slide therein in the axial direction, and a first oil chamber 31c defined by the first piston 34 and the first cylinder 31a. The housing 31 slidably contacts the seal 35 so as to slide on the sliding surface of the first cylinder 31a. The housing 31 includes a second cylinder 31b receiving the second piston 36 to which the operation force is applied so that the second piston 36 may slide therein in the radius direction (perpendicular to the axial direction), and a second oil chamber 31d defined by the second piston 36 and the second cylinder 31b. The housing 31 has, in the sliding surface of the second cylinder 31b, annular grooves for receiving the seals 32, 33. The housing 31 includes an oil channel 31e communicating the first and second oil chambers 31c, 31d with each other. The first and second chambers 31c, 31d and the oil channel 31e are filled with working oil. The second cylinder 31b is more distant from the output axis 3 than the first cylinder 31a is, and the second cylinder 31b is disposed in the space (corresponding to "dead space") between the clutch cover 21 and the clutch housing 46. Now that the second cylinder 31b is disposed in such dead space and, further, the second piston 36 slides in the axial direction, the size of the clutch apparatus 1 is prevented from increasing. The housing 31 has an attachment portion 31f in which the housing 31 is attached to the clutch housing 46 using a blot (not shown), etc.

The seals 32, 33 are annular members sealing the sliding surface between the second cylinder 31b of the housing 31 and the second piston 36. The seals 32, 33 are accommodated within the annular grooves formed in the sliding surface of the second cylinder 31b, and slidably contact the second piston 36.

The first piston 34 is a piston slidably disposed within the first cylinder 31a of the housing 31. The first piston 34 presses on the release bearing 25 according to the pressure of the working oil within the first oil chamber 31c. The first piston 34 has, in the sliding surfaces of inner and outer circumferences (when the axis 3 becomes the center of the circumferences), annular grooves for receiving seals 35 respectively.

The seals 35 are annular members sealing the sliding surfaces between the first cylinder 31a of the housing 31 and the first piston 34. The seals 35 are accommodated within the annular grooves formed in the sliding surfaces of the inner and outer circumferences of the first piston 34, and slidably contact the first piston 34.

The second piston 36 is a piston slidably disposed within the second cylinder 31b of the housing 31. The second piston 36 has, at the surface opposite to the second oil chamber 31d side surface thereof, the cam surface 36a formed in an approximately circular shape so as to be depressed toward the second old chamber 31d. The ball 38 rolls on and along the cam surface 36a due to the biasing of the spring 40. The second piston 36 is attached to one end of the return spring 37, and, thus, is pressed by the return spring 37 toward the second oil chamber 31d. The second piston 36 is biased toward the second oil chamber 31d according to the biasing direction (i.e., position at which the cam surface 36a and the ball 38 are in contact with each other) of the spring 40 oscillating relative to the axial member 43. The second piston 36 is, at the sliding surface of an outer periphery thereof, in contact with the seals 32, 33 so as to slide with each other.

The return spring 37 is a spring pressing the second piston 36 toward the second oil chamber 31d. One end of the return spring 37 is attached to the second piston 36 while the other end thereof is attached to the clutch housing 46.

The ball 38 is a sphere rolling on and along the cam surface 36a of the second piston 36. The ball 38 is supported with the seat 39 in such a way as to roll. The ball 38 is biased through the seat 39 by the spring 40 against the cam surface 36a.

The seat 39 is a member supporting one end of the spring 40. The seat 39 supports the ball 38 so that the ball 38 rolls. The seat 39 is attached to the spring 40 so as to slide in the radius direction of the gear plate 44 from a predetermined portion of the gear plate 44 and moves together with the rotation of the gear plate 44 in the same direction as the rotation direction of the gear plate 44.

The spring 40 is a member biasing the ball 38 against the cam surface 36a of the second piston 36. The seat 39 is attached to one end of the spring 40, and the seat 41 is attached to the other end of the spring 40. The load generated from the spring 40 when the ball 38 is biased in the sliding direction of the second piston 36 is set so as to balance with the pressure load (corresponding to the load from the disk spring 15) generated from the friction surfaces of the clutch disk 10 when the clutch disk 10 is pressed between the flywheel 4 and the pressure plate 24. A biasing direction of the spring 40 relative to the axial member 43 is set to form 90° with the rotation direction (direction of load resulting from the operation of the clutch pedal) of the gear plate 44 corresponding to the operation of the clutch pedal (not shown).

The seat 41 is a member supporting the other end of the spring 40. The seat 41 is pivotally attached by the axial member 43 attached to the supporting member 42.

The supporting member 42 is a member supporting the axial member 43. The supporting member 42 is attached to the clutch housing 46.

The axial member 43 is a member supporting the gear plate 44 so that the plate 44 rotates. The axial member 43 is attached to the supporting member 42 and supports the seat 41 so that the seat 41 oscillates.

The gear plate 44 is the circular plate whose outer surface has the teeth. The teeth are engaged with the teeth of the rack bar 44. The gear plate 44 is rotatably supported with the axial member 43. The seat 39 is attached so as to slide in the radius direction of the gear plate 44 from the predetermined portion of the gear plate 44 and moves together with the rotation of the gear plate 44 in the same direction as the rotation direction of the gear plate 44.

The rack bar 45 is the straight line bar whose one side has the teeth. Such teeth are engaged with the teeth of the gear plate 44. The rack bar 45 is moved in the extending direction thereof depending on the operation of the clutch pedal (not shown). The rack bar 45 rotates the gear plate 44 rotate based on the operation of the clutch pedal (not shown). The rack bar 45 and the gear plate 44 become the mechanism which uses the working amount of the clutch pedal (not shown) to have the load generated from the spring 40 when biasing the second piston 36 in its sliding direction unbalance with the pressure load (corresponding to the load from the disk spring 15) generated from the friction surfaces of the clutch disk 10 disposed between the flywheel 4 and the pressure plate 24.

The clutch housing 46 is a housing receiving the clutch apparatus 1. The attachment portion 31f of the housing 31 is attached to the clutch housing 46 using the bolt (not shown), etc. To the clutch housing 46 is attached the other end of the return spring 37. To the clutch housing 46 is attached the supporting member 42.

Next, the operations of the clutch apparatus 1 according to the first embodiment of the invention will be explained.

First, described will be the operation in which the clutch apparatus 1 transitions from the released mode (when the pedaling force is applied to the clutch pedal; refer to Fig.2) to the engaged mode (when the pedaling force is not applied to the clutch pedal: refer to Fig.1). The rack bar 45 is moved toward the right side of Fig.2, and, in this way, the gear plate 44 rotates in a clockwise direction of Fig.2. Hence, in association with the rotation of the gear plate 44, the biasing direction of the spring 40 rotates in the clockwise direction of Fig.2, and, thus, the biasing direction of the spring 40 has changed so as to be identical with the sliding direction of the second piston 36, resulting in that the second piston 36 is pressed toward and inserted into the most inner region of the second cylinder 31b. In turn, in association with such movement of the second piston 36, some of the working oil within the second oil chamber 31d flows into the first oil chamber 31c through the oil channel 31e, and, then, due to the increase of the hydraulic pressure generated within the first oil chamber 31c resulting from the flow of the oil, the first piston 34 presses through the release bearing 25 the pressured point 22a of the release lever 22 toward the input axis 2. In this manner, the release lever 22, while the pivot point 22b thereof is supported with the cover 21, moves so that the action point 22c thereof presses the pressure plate 24 toward the flywheel 4. As a result, the pressure plate 24 and the flywheel 4 are attached, in a pressing way, to the clutch disk 10, thereby transferring the rotation power from the output axis 3 to the input axis 2. Herein, the attachment pressure is generated from the spring 40.

Second, described will be the operation in which the clutch apparatus 1 transitions from the engaged mode (when the pedaling force is not applied to the clutch pedal: refer to Fig.1) to the released mode (when the pedaling force is applied to the clutch pedal; refer to Fig.2). The rack bar 45 is moved toward the left side of Fig.1, and, in this way, the gear plate 44 rotates in a counterclockwise direction of Fig.1. Hence, in association with the rotation of the gear plate 44, the biasing direction of the spring 40 rotates in the counterclockwise direction of Fig.1, and, thus, the biasing direction of the spring 40 has changed so as to be perpendicular to the sliding direction of the second piston 36, resulting in that the second piston 36 is separated and withdrawn from the inner region of the second cylinder 31b. In turn, in association with such movement of the second piston 36, some of the working oil within the first oil chamber 31c flows into the second oil chamber 31d through the oil channel 31e, and, then, due to the decrease of the hydraulic pressure generated within the first oil chamber 31c resulting from the decrease of the oil therein, the first piston 34 slides so as to be spaced away from the input axis 2. Thus, the pressing state through the release bearing 25 the pressured point 22a of the release lever 22 toward the input axis 2 has been released. In this manner, the state in which the action point 22c presses the pressure plate 24 toward the flywheel 4 also has been released. As a result, the state in which the pressure plate 24 and the flywheel 4 are attached, in a pressing way, to the clutch disk 10 has been released, thereby interrupting the rotation power transmission from the output axis 3 to the input axis 2.

Meanwhile, loads from the disk spring 23 and return spring 37 are set to be as small as are negligible relative to the load from the spring 40.

In accordance with the first embodiment, even when with the large engine torque, the pressure load (load from the disk spring 15) generated from the friction surfaces of the clutch disk 10 disposed between the flywheel 4 and the pressure plate 24 becomes large, the pedaling force to the clutch pedal is used only to have the load from the spring 40 of the release mechanism 30 unbalance with the pressure load generated from the friction surfaces of the clutch disk 10. Further, since the biasing direction of the spring 40 relative to the axial member 43 always forms 90° with the rotation direction of the gear plate 44 corresponding to the operation of the clutch pedal (not shown), the pedaling force used to bring about the unbalance corresponds to the friction force resulting from the load from the spring 40 of the release mechanism 30 (or corresponds to the frictional resistance generated when the ball 38 rolls), so that the clutch apparatus comes into the released mode with very small working amount of the clutch pedal. For this reason, the load efficiency in the more downstream region (clutch pedal region) of the clutch operation path than the release mechanism 30 may improve, and, hence, it is possible to improve the clutch operation feeling even in the vehicle with the large engine torque.

### Second embodiment

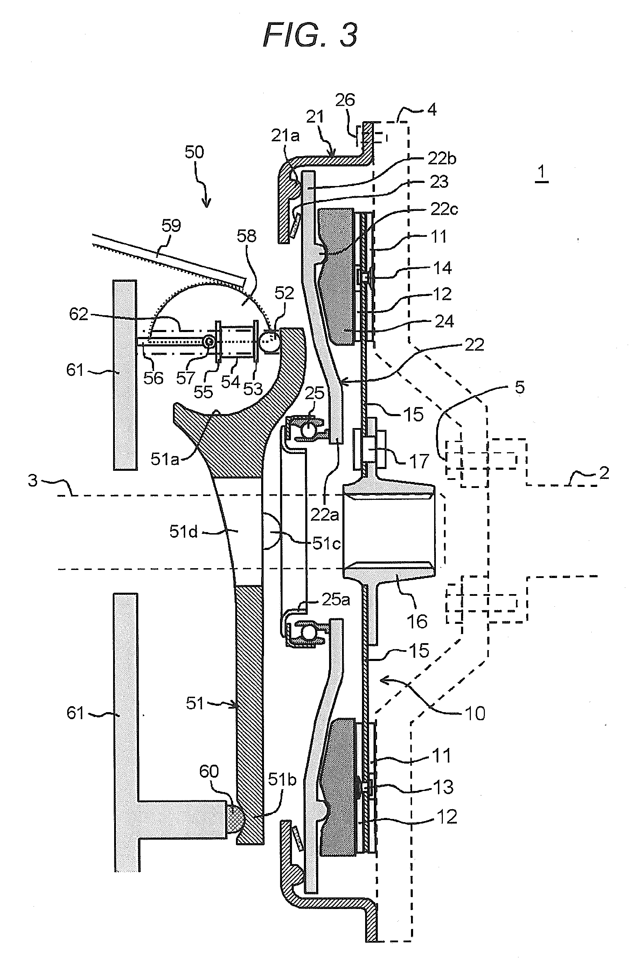

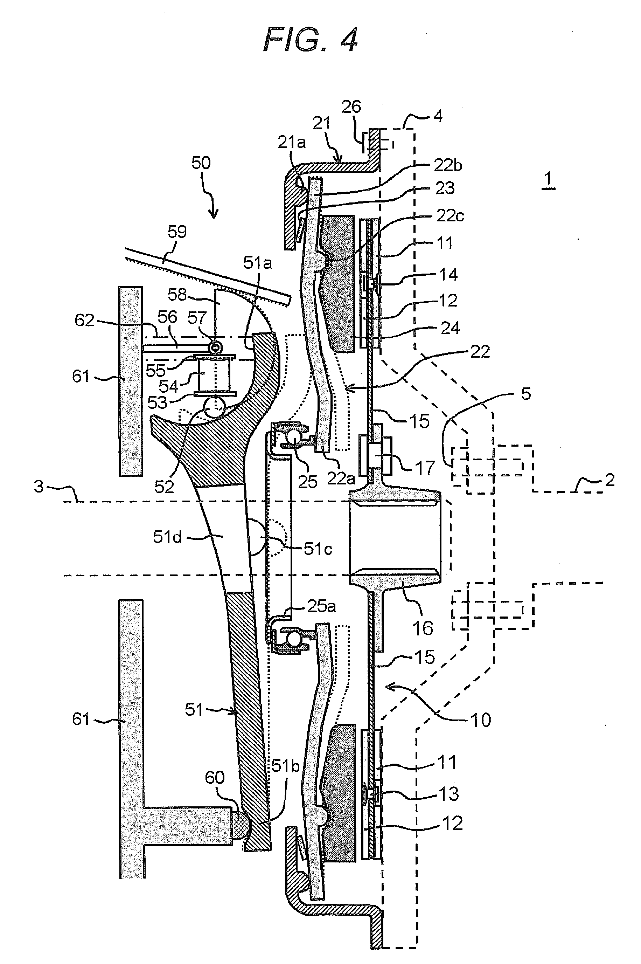

Herein, the clutch apparatus according to a second embodiment of the invention will be described with reference to the drawings. Fig.3 is a schematic cross-sectional view of the clutch apparatus according to the second embodiment of the invention in which the clutch apparatus comes into the engagement mode. Fig.4 is a schematic cross-sectional view of the clutch apparatus according to the second embodiment of the invention in which the clutch apparatus comes into the disengagement mode.

This second embodiment has the same configuration as that of the first embodiment except that a release mechanism 50 uses a lever mechanism including a lever member instead of the release mechanism 30 (of the first embodiment) including the hydraulic mechanism (including the housing 31 and first and second pistons 34, 36 of Fig.1).

The release mechanism 50 is a mechanism engaging/releasing the clutch apparatus 1. The release mechanism 50 has the mechanism which sets, when the clutch disk 10 is pressed between the flywheel 4 and the pressure plate 24, the load from the spring 54 thereof so as to balance with the pressure load (corresponding to the load from the disk spring 15) generated from friction surfaces of the clutch disk 10, and uses working amount (corresponding to the stroke of the rack bar 59 or rotation amount of the gear plate 58) of the clutch pedal (not shown) to have the load from the spring 54 unbalance with the pressure load generated from the friction surfaces of the clutch disk 10. The release mechanism 50 includes as the primary components a lever member 51, a ball 52, a seat 53, a spring 54, a seat 55, a supporting member 56, an axial member 57, a gear plate 58, a rack bar 59, and a support member 60.

The lever member 51 is a constituent member of the lever mechanism disposed between the clutch cover 21 and the clutch housing 61. The lever member 51 is pivotally supported by the support member 60 attached to the clutch housing 61. The lever member 51, in one end thereof, has a cam surface 51a formed in an approximately circular shape so as to be, at a pressured point to which the pressure from the ball 52 is applied, depressed toward an inner circumference of the clutch apparatus 1. The ball 52 rolls, due to the biasing of the spring 54, on and along the cam surface 51a. The lever member 51 has, in the other end thereof, a pivot point 51b pivotally supported by the support member 60. The lever member 51 has, at a release bearing 25 side surface of a middle portion thereof, an action point 51 being in contact with a supporting member 25a of the release bearing 25. The lever member 51 has, in the middle portion thereof, a through-hole portion 51d through which the output axis 3 passes. The through-hole portion 51d is formed so that even when the lever member 51 oscillates while the pivot point 51b is supported with the member 60, such oscillation of the lever member 51 does not interfere with the rotation of the output axis 3. The lever member 51 is formed so that even when the lever member 51 oscillates while the pivot point 51b is supported with the member 60, such oscillation of the lever member 51 does not interfere with the rotation of the gear plate 58. The lever member 51, at a predetermined portion of the cam surface 51a, is attached to one end of the return spring 62 by which the lever member 51 is pressed toward the release lever 22.

The ball 52 is a sphere rolling on and along the cam surface 51a of the lever member 51. The ball 52 is supported with the seat 53 in such a way as to roll. The ball 52 is biased through the seat 53 by the spring 54 against the cam surface 51a.

The seat 53 is a member supporting one end of the spring 54. The seat 53 rollably supports the ball 52. The seat 53 is attached to the spring 54 so as to slide in the radius direction of the gear plate 58 from a predetermined portion of the gear plate 58 and moves together with the rotation of the gear plate 58 in the same direction as the rotation direction of the gear plate 58.

The spring 54 is a member biasing the ball 52 against the cam surface 51a of the lever member 51. The seat 53 is attached to one end of the spring 54, and the seat 55 is attached to the other end of the spring 54. The load generated from the spring 54 when the ball 52 is biased in the axial direction of the output axis 3 is set so as to balance with the pressure load (corresponding to the load from the disk spring 15) generated from the friction surfaces of the clutch disk 10 when the clutch disk 10 is pressed between the flywheel 4 and the pressure plate 24. A biasing direction of the spring 54 relative to the axial member 57 is set to form 90° with the rotation direction of the gear plate 58 corresponding to the operation of the clutch pedal (not shown).

The seat 55 is a member supporting the other end of the spring 54. The seat 55 is pivotally attached to the axial member 57 attached to the supporting member 56.

The supporting member 56 is a member supporting the axial member 57. The supporting member 56 is attached to the clutch housing 61.

The axial member 57 is a member supporting the gear plate 58 so that the plate 58 rotates. The axial member 57 is attached to the supporting member 56 and supports the seat 55 so that the seat 55 oscillates.

The gear plate 58 is the circular plate whose outer surface has the teeth. The teeth are engaged the teeth of the rack bar 59. The gear plate 58 is rotatably supported with the axial member 57. The seat 53 is attached so as to slide in the radius direction of the gear plate 58 from the predetermined portion of the gear plate 58 and moves together with the rotation of the gear plate 58 in the same direction as the rotation direction of the gear plate 58.

The rack bar 59 is the straight line bar whose one side has the teeth. Such teeth are engaged with the teeth of the gear plate 58. The rack bar 59 is moved in the extending direction thereof depending on the operation of the clutch pedal (not shown). The rack bar 59 rotates the gear plate 58 based on the operation of the clutch pedal (not shown). The rack bar 59 and the gear plate 58 become the mechanism which uses the working amount of the clutch pedal (not shown) to have the load generated from the spring 54 when biasing the ball 52 in the axial direction of the output axis 3 unbalance with the pressure load (corresponding to the load from the disk spring 15) generated from the friction surfaces of the clutch disk 10 disposed between the flywheel 4 and the pressure plate 24.

The support member 60 is a member supporting the pivot point 51b of the lever member 51 so that the portion 51b oscillates. The member 60 is attached to the clutch housing 61.

The clutch housing 61 is a housing receiving the clutch apparatus 1. The supporting member 56 and the support member 60 are attached to the clutch housing 61.

The return spring 62 is a spring pressing a predetermined portion of the cam surface 51a of the lever member 51 toward the release lever 22. One end of the return spring 62 is attached to the predetermined portion of the cam surface 51a of the lever member 51 while the other end thereof is attached to the clutch housing 61.

Next, the operations of the clutch apparatus 1 according to the second embodiment of the invention will be explained.

First, described will be the operation in which the clutch apparatus 1 transitions from the released mode (when the pedaling force is applied to the clutch pedal; refer to Fig.4) to the engaged mode (when the pedaling force is not applied to the clutch pedal: refer to Fig.3). The rack bar 59 is moved upwards toward the left side of Fig.4, and, in this way, the gear plate 58 rotates in a counterclockwise direction of Fig.4. Hence, in association with the rotation of the gear plate 58, the biasing direction of the spring 54 rotates in the counterclockwise direction of Fig.4, and, thus, the biasing direction of the spring 54 has changed so as to be identical with the axial direction of the output axis 3, resulting in that the lever member 51 moves while the pivot point 51b is supported with the member 60. Hence, the action point 51c of the lever member 51 presses through the release bearing 25 (including the supporting member 25a) the pressured point 22a of the release lever 22 toward the input axis 2. In this manner, the release lever 22, while the pivot point 22b thereof is supported with the cover 21, moves so that the action point 22c thereof presses the pressure plate 24 toward the flywheel 4. As a result, the pressure plate 24 and the flywheel 4 are attached, in a pressing way, to the clutch disk 10, thereby transferring the rotation power from the output axis 3 to the input axis 2. Herein, the attachment pressure is generated from the spring 54.

Second, described will be the operation in which the clutch apparatus 1 transitions from the engaged mode (when the pedaling force is not applied to the clutch pedal: refer to Fig.3) to the released mode (when the pedaling force is applied to the clutch pedal; refer to Fig.4). The rack bar 59 is moved downwards toward the right side of Fig.3, and, in this way, the gear plate 58 rotates in a clockwise direction of Fig.3. Hence, in association with the rotation of the gear plate 58, the biasing direction of the spring 54 rotates in the clockwise direction of Fig.3, and, thus, the biasing direction of the spring 54 has changed so as to be perpendicular to the axial direction of the output axis 3, resulting in that the lever member 51 moves while the pivot point 51b is supported with the member 60. Hence, the state in which the action point 51c of the lever member 51 presses through the release bearing 25 (including the supporting member 25a) the pressured point 22a of the release lever 22 toward the input axis 2 has been released. Thus, the pressing state through the release bearing 25 the pressured point 22a of the release lever 22 toward the input axis 2 has been released. In this manner, the state in which the action point 22c presses the pressure plate 24 toward the flywheel 4 also has been released. As a result, the state in which the pressure plate 24 and the flywheel 4 are attached, in a pressing way, to the clutch disk 10 has been released, thereby interrupting the rotation power transmission from the output axis 3 to the input axis 2.

Meanwhile, the load from the disk spring 23 is set to be as small as are negligible relative to the load from the spring 54.

In accordance with the second embodiment, the same effects as those according to the first embodiment are accomplished, and, further, required is the smaller number of the parts of the apparatus than the number of the parts of the apparatus in the first embodiment, thereby reducing the manufacturing cost of the clutch apparatus.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A clutch apparatus comprising:
a flywheel (4);
a pressure plate (24) opposed to the flywheel;
a clutch disk (10) disposed between the flywheel and the pressure plate;
a clutch cover (21) that rotate together the flywheel;
a release bearing (25) disposed so as to be movable in an axial direction of the clutch cover (21);
a release lever (22) having a pressured point (22a) for receiving pressure load from the release bearing (25), a pivot point (22b) at which the lever is pivotally supported by the clutch cover (21), and an action point (22c) which presses the pressure plate (24) toward the flywheel (4); and
a release mechanism (30;50) configured to move the release bearing (25) based on an operation of a clutch pedal,
wherein the release mechanism (30;50) includes a spring (40;54) having a spring load so as to be balanced with pressure load generated from friction surfaces of the clutch disk (10) when the clutch is pressed by the flywheel (4) and the pressure plate (24), and
wherein the release mechanism includes a mechanism which uses working amount of the clutch pedal to have the load from the spring (40;54) unbalance with the pressure load generated from the friction surfaces of the clutch disk (10).

2. The clutch apparatus according to claim 1, wherein a biasing direction of the spring (40;54) is set to 90° with respect to a direction of load resulting from the operation of the clutch pedal.

3. The clutch apparatus according to claim 1 or 2, wherein
the clutch disk (10) includes a disk spring (15),
friction materials (11, 12) are attached to opposite sides of the disk spring (15) at a portion where the disk spring is disposed between the flywheel (4) and the pressure plate (24), and
the pressure load generated from the friction surfaces of the clutch disk (10) is load generated from the disk spring (15) when the clutch disk (10) is pressed between the flywheel (4) and the pressure plate (24).

4. The clutch apparatus according to any one of claims 1 to 3, wherein
the release mechanism (30;50) includes:
a straight rack bar (45;59) which includes teeth and is movable in an extending direction of the rack bar according to the operation of the clutch pedal;
a gear plate (44,58) which has a circular plate whose outer surface has teeth engaged with the teeth of the rack bar (45;59) and is rotatably supported with a clutch housing;
a first seat (41;55) attached to one end of the spring (40;54) of the release mechanism (30;50) and pivotally supported with respect to a rotation axis of the gear plate (44;58);
a second seat (39;53) attached to the other end of the spring (40;54) of the release mechanism (30;50) so as to slide in a radius direction of the gear plate (44;58) from a predetermined portion of the gear plate (44;58) and moving together with the rotation of the gear plate in the same direction as the rotation direction of the gear plate;
a ball (38;52) rollably supported with a surface of the second seat (39;53) opposite to the spring (40;54); and
a pressure transfer mechanism oscillates the release bearing (25) through the ball (38;52) according to a pressuring direction of the spring (40;54) and having a cam surface (36a;51a) on and along which the ball rolls.

5. The clutch apparatus according to claim 4, wherein
the pressure transfer mechanism includes a hydraulic mechanism which includes:
a first piston (34) for pressing against the release bearing (25);
a second piston (36) at which the cam surface (36a) is formed; and
a housing (31) including:
a first cylinder (31a) attached to the clutch for receiving the first piston (34) so that the first piston slides in the axial direction therein;
a first oil chamber (31c) defined by the first cylinder (31a) and the first piston (34);
a second cylinder (31b) for receiving the second piston (36) so that the second piston slides therein;
a second oil chamber (31d) defined by the second cylinder (31b) and the second piston (36); and
an oil channel (31e) communicating the first and second oil chambers with each other,
wherein the first and second chambers and the oil channel are filled with working oil.

6. The clutch apparatus according to claim 5, wherein the second cylinder (31b) receives the second piston (36) so that the second piston slides in the radius direction therein.

7. The clutch apparatus according to claim 4, wherein
the pressure transfer mechanism includes a lever mechanism including a lever member (51) having the cam surface (51a) as a pressed point portion;
a pivot point (51b) pivotally supported by the clutch housing (61); and
an action point (51c) pressing against the release bearing (25).
